# EUROPÄISCHE PATENTSCHRIFT

(11) **EP 1 296 793 B1**
(45) Veröffentlichungstag und Bekanntmachung des Hinweises auf die Patenterteilung: **27.10.2004**
(21) Anmeldenummer: 01940577.8
(22) Anmeldetag: 16.06.2001
(51) Int. Cl.: B23B 51/02

(54) **BOHRWERKZEUG**
DRILLING TOOL
OUTIL DE PERCAGE

(30) Priorität: 27.06.2000 DE 10030297
(43) Veröffentlichungstag der Anmeldung: 02.04.2003
(73) Patentinhaber: KOMET GROUP Holding GmbH, 74354 Besigheim (DE)
(72) Erfinder: FRITSCH, Andree, 74392 Freudental (DE); KRUSZYNSKI, Jacek, 70190 Stuttgart (DE); RÖSER, Frank, 74376 Gemmrigheim (DE); SCHÜTT, Henry, 74343 Sachsenheim (DE); SPORS, Benno, 71672 Marbach (DE); HEILMANN, Jürgen, 74391 Erligheim (DE); LEUZE, Peter, 74399 Walheim (DE)
(74) Vertreter: Wolf, Eckhard, Dr.-Ing.
(86) Internationale Anmeldenummer: PCT/EP2001/006830
(87) Internationale Veröffentlichungsnummer: WO 2002/000381

(56) Entgegenhaltungen:
- DE-A- 3 611 999
- US-A- 4 961 672

## Beschreibung

Die Erfindung betrifft ein Bohrwerkzeug mit einem um eine Bohrerachse drehbaren Grundkörper, mit mindestens zwei stimseitig im Grundkörper angeordneten Plattensitzen und mit in die Plattensitze auswechselbar einsetzbaren, vorzugsweise gleich ausgebildeten Schneidplatten, die je eine an eine Hauptschneide anschließende Spanfläche und Freifläche, eine der Freifläche abgewandte Sitzfläche und eine radial außen über je eine Kante an die Spanfläche, die Freifläche und gegebenenfalls die Sitzfläche anschließende Führungsfase sowie eine die Freifläche und die Sitzfläche durchdringende Durchtrittsöffnung für eine in eine im Bereich der Plattensitze zur Stirnseite des Grundkörpers offene Gewindebohrung eindrehbare Befestigungsschraube aufweisen.

Bohrwerkzeuge dieser Art werden überwiegend als doppelschneidige oder mehrschneidige Vollbohrer verwendet, die ähnlich aufgebaut sind wie ein Spiralbohrer, jedoch mit wechselbaren Schneidplatten. Die stimseitig in die Bohrerspitze eingeschraubten Schneidplatten weisen im Bereich ihrer Schneiden einen Anstellwinkel auf, der dafür sorgt, daß der Bohrer in der Bohrung zentriert wird. Bei den bekannten Bohrwerkzeugen dieser Art (DE-A-3611999, US-4961672) weisen die Schneidplatten eine komplizierte Plattenform auf, die nur in Hartmetallspritztechnologie hergestellt werden kann. Da das Hartmetall spröde ist, dürfen die daraus bestehenden Schneidplatten nicht auf Biegung beansprucht werden. Mit den komplizierten Plattenformen versucht man im Stand der Technik Biegebeanspruchungen in den Platten zu vermeiden. Aufgrund ihrer komplizierten Form sind die Schneidplatten aufwendig in ihrer Herstellung und daher für den Masseneinsatz unverhältnismäßig teuer. Die Befestigungsschrauben greifen dort durchweg in achsparallel zur Bohrerachse ausgerichtete Gewindebohrungen des Grundkörpers ein. Dementsprechend sind die Durchtrittsöffnungen in den Schneidplatten schräg zur jeweiligen Freifläche ausgerichtet. Doppelund Mehrfachschneider sind für hohe Spanleistungen mit hohem Vorschub ausgelegt. Dementsprechend hoch sind die über die Schneidplatten in den Grundkörper hinein abzuleitenden Reaktionskräfte. Die Plattensitze der bekannten Bohrer sind im Bereich ihrer Sitzkanten recht dünnwandig ausgebildet und führen daher bei den geforderten Spanleistungen zu Problemen beim längeren Bearbeitungseinsatz.

Ausgehend hiervon liegt der Erfindung die Aufgabe zugrunde, ein zwei- oder mehrschneidiges Bohrwerkzeug der eingangs angegebenen Art zu entwikkeln, das die Verwendung von Schneidplatten mit einfacher Plattenform ermöglicht und dennoch auch bei hohen Spanleistungen eine optimale Einkopplung der beim Zerspanungsvorgang an den Schneidplatten angreifenden Kräfte in den Grundkörper ermöglicht.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Der Erfindung liegt der Gedanke zugrunde, daß die Plattenform bei optimaler Krafteinleitung dadurch vereinfacht werden kann, daß die Durchtrittsöffnungen mit ihrer Achse senkrecht zur Freifläche der zugehörigen Schneidplatten ausgerichtet sind und daß die Achsen der Gewindebohrungen im Grundkörper entsprechend schräg zur Bohrerachse und schräg zueinander ausgerichtet sind. Gewindebohrungen werden zweckmäßig dorthin gelegt, wo genügend Material im Grundkörper vorhanden ist. Dabei ist zu berücksichtigen, daß der Grundkörper durch die vorhandenen Spannuten einerseits und durch Kühlmittelbohrungen andererseits noch weitere Strukturverengungen aufweist, die eine nur eingeschränkte Möglichkeit der Unterbringung für die Gewindebohrungen offen läßt. Ein weiterer Gedanke besteht darin, daß die Plattensitze so in den Grundkörper eingebracht sind, daß die durch die Zerspanung anfallenden Hauptschnittkräfte über die Schneidplatten verbiegungsfrei auf die Plattensitze bzw. in den Grundkörper eingeleitet werden. Gemäß einer bevorzugten Ausgestaltung der Erfindung sind die Freiflächen und die Sitzfläche der einzelnen Schneidplatten planparallel zueinander ausgerichtet, so daß die Durchtrittsöffnung mit ihrer Achse auch senkrecht zur Sitzfläche ausgerichtet ist. Hieraus folgt, daß die Achsen der Gewindebohrungen windschief zur Bohrerachse und zueinander ausgerichtet sind. Bevorzugt sind die Gewindebohrungen im Grundkörper von ihrer stimseitigen Öffnung aus schräg in Richtung einer durch die Hauptschneide der zugehörigen Schneidplatte verlaufenden achsparallelen Ebene und schräg in Richtung einer hierzu senkrechten, durch die Achse des Grundkörpers verlaufenden achsparallelen Ebene gerichtet. Durch die Neigung der Gewindebohrungen im Grundkörper wird bei planparallelen Schneidplatten der Spitzenwinkel des Bohrers und der Freiflächenwinkel vorgegeben. Aufgrund der planparallelen Schneidplatten werden alle für den Schneidvorgang maßgeblichen Parameter durch den Plattensitz definiert, während der Bohrungsdurchmesser durch die radiale Lage der Führungsfase an der Schneidplatte definiert wird.

Die Hauptschneiden der Schneidplatten eilen einer zu diesen und der Bohrerachse parallelen Mittelebene in Schneidrichtung des Bohrers voraus, wobei die Schneidplatten bezüglich der Bohrerachse spiegelsymmetrisch am Bohrerkörper angeordnet sind.

Im Bereich der Bohrerachse weisen die einander benachbarten Schneidplatten einen Abstand von weniger als 0,2 mm, vorzugsweise von 0,05 bis 0,15 mm voneinander auf. Die Schneidkante ist zum Zentrum hin so verfast, daß sich eine Art Nebenschneide in Richtung Zentrum ergibt, die das Zentrum umschneidet. Beim Bohrvorgang bleibt somit ein minimaler Butzen oder Zapfen stehen, dessen Durchmesser kleiner als 0,1 mm ist.

Dieser Zapfen wird nicht zerspant, sondern wird bei den meisten Materialien zerbröselt. Vor allem bei Werkstücken aus zähem Material, wie Edelstahl, tritt das Zerbröseln nur dann auf, wenn der Plattenabstand entsprechend klein ist. Es hat sich gezeigt, daß bei einem Plattenabstand von 0,1 mm selbst bei Sacklochbohrungen kein Zapfen in der Mitte stehen bleibt. Der Zapfen wird vielmehr bis auf den Grund zerbröselt, so daß keine Nachbearbeitung notwendig ist. Eine weitere Verbesserung in dieser Hinsicht wird erzielt, wenn in dem Grundkörper im Abstandsbereich zwischen den beiden Schneidplatten eine von den Schneidplatten aus in eine der Spanfördemuten mündende, unsymmetrisch zur Bohrerachse angeordnete Abweisschräge eingeformt ist.

Um eine gleichmäßige Krafteinkopplung von den Schneidplatten in den Grundkörper ohne Belastungsspitzen zu gewährleisten, wird gemäß der Erfindung vorgeschlagen, daß die Schneidplatten mit mindestens zwei einen Winkel miteinander einschließenden Kantenflächen formschlüssig in den zugehörigen Plattensitz eingepaßt sind. Die Befestigungsschrauben weisen dabei zweckmäßig einen in eine konische Einsenkung im Bereich der Durchtrittsöffnung eingepaßten Senkkopf auf, wobei die Senkkopfpassung und die Sitzpassung einen gegenseitigen Versatz zur Erzeugung eines Preßsitzes aufweisen. Die beiden formschlüssig in den Plattensitz eingepaßten Kantenflächen schließen vorteilhafterweise einen Winkel von 80° bis 100°, vorzugsweise von 90° miteinander ein und sind zweckmäßig über eine abgerundete Ecke miteinander verbunden. Die gerundete Kontur der Sitzkanten im Übergangsbereich sorgt für eine formschlüssige Umschließung der Schneidplatte in diesem Bereich. Damit erhält man zum einen eine hohe Wechselgenauigkeit und zum anderen eine Stabilisierung des Grundkörpers und eine gleichmäßige Krafteinkupplung von der Schneidplatte in den Grundkörper, ohne Belastungsspitzen, wie sie beispielsweise bei kantigen Plattensitzen vorkommen.

Weiter hat es sich als vorteilhaft erwiesen, daß die Hauptschneide der Schneidplatte und die freiflächenseitige Begrenzungskante der der Spanfläche benachbarten Sitzkante einen Winkel von 60° bis 80° miteinander einschließen, wobei die Hauptschneide und die betreffende Begrenzungskante über eine abgerundete oder facettierte Schneiden- oder Kantenpartie miteinander verbunden sein können. Andererseits schließen die Hauptschneide und die freiflächenseitige Begrenzungskante der von der Spanfläche abgewandten Sitzkante zweckmäßig einen radial nach außen konvergierenden spitzen Winkel von 10° bis 30° miteinander ein, während die Führungsfase und die von der Hauptschneide abgewandte Sitzkante über eine gegenüber der Führungsfase schräg radial nach innen gerichtete Kantenfläche miteinander verbunden sein können. Bei dieser Plattenform wird sichergestellt, daß außerhalb des Plattensitzes genügend Material im Grundkörper vorhanden ist, das eine stabile Abstützung der Schneidenplatte am Grundkörper sicherstellt.

Gemäß einer weiteren bevorzugten Ausgestaltung der Erfindung ist die Führungsfase der Schneidplatte im Einbauzustand über die Plattendicke hinweg parallel zur Bohrerachse ausgerichtet. Die Freifläche und die Führungsfase schließen dabei zweckmäßig einen Winkel größer 90° miteinander ein, während der Winkel zwischen der Hauptschneide und der freiflächenseitigen Begrenzungskante der Führungsfase etwa 90° beträgt. Die Führungsfase erstreckt sich somit über die gesamte Plattendicke. Um eine ausreichende Führung im Bereich der Führungsfase zu erhalten, sollte die Plattendicke mindestens dem 0,2-fachen des Bohrungsradius gewählt werden. Vorteilhafterweise entspricht die Plattendicke dem 0,2- bis 0,5-fachen des Bohrungsradius.

Mit den erfindungsgemäßen Maßnahmen wird gewährleistet, daß die Zentrumslage der Schneidplatten durch den Plattensitz bestimmt wird. Die Durchtrittsbohrung ist dabei innerhalb der Schneidplatte in Richtung Bohrermitte gerückt, wobei sich die optimale Lage der Durchtrittsöffnung im Bereich des Massenmittelpunkts der Schneidplatte befindet.

Ein wichtiger Vorteil der Erfindung besteht darin, daß mit einem einzigen Plattenrohling durch einfaches Abschleifen im Bereich der Führungsfase stufenlos unterschiedliche Bohrungsdurchmesser realisiert werden können. Damit kann auch mit ein- und demselben Grundkörper ein größerer Durchmesserbereich als bisher überdeckt werden. Auch die Durchmesserabstufungen im Grundkörper können größer als der bisher übliche Millimeterabstand gewählt werden.

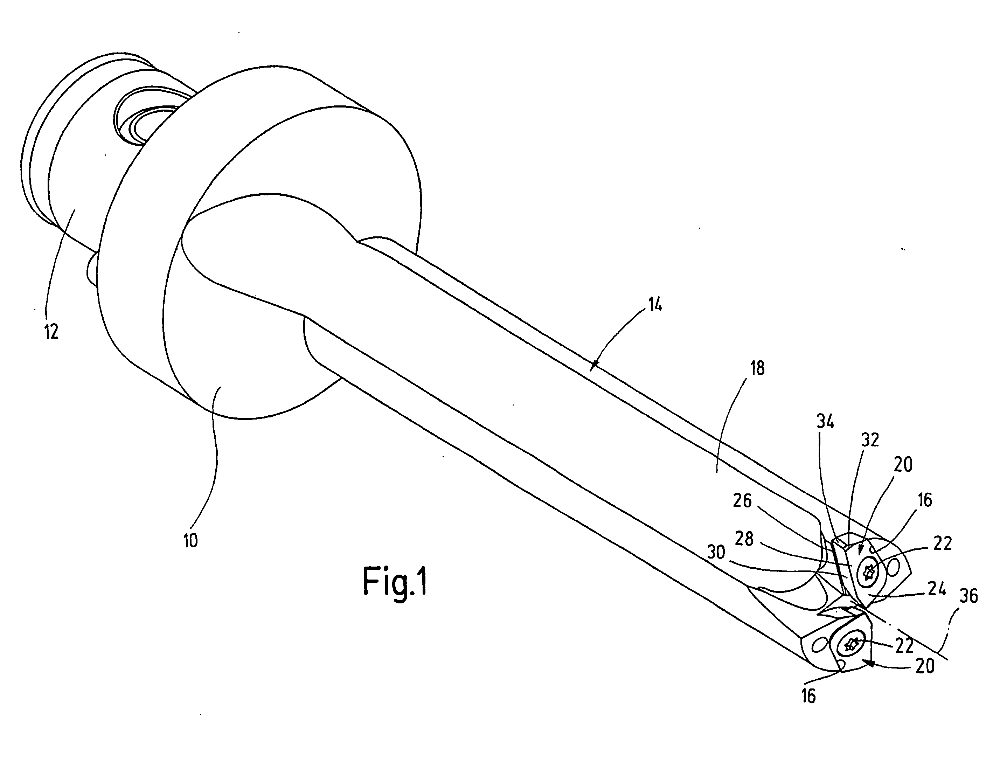

Im folgenden wird die Erfindung anhand eines in der Zeichnung schematisch dargestellten Ausführungsbeispiels näher erläutert. Es zeigen
- Fig. 1: eine schaubildliche Darstellung eines Bohrwerkzeugs;

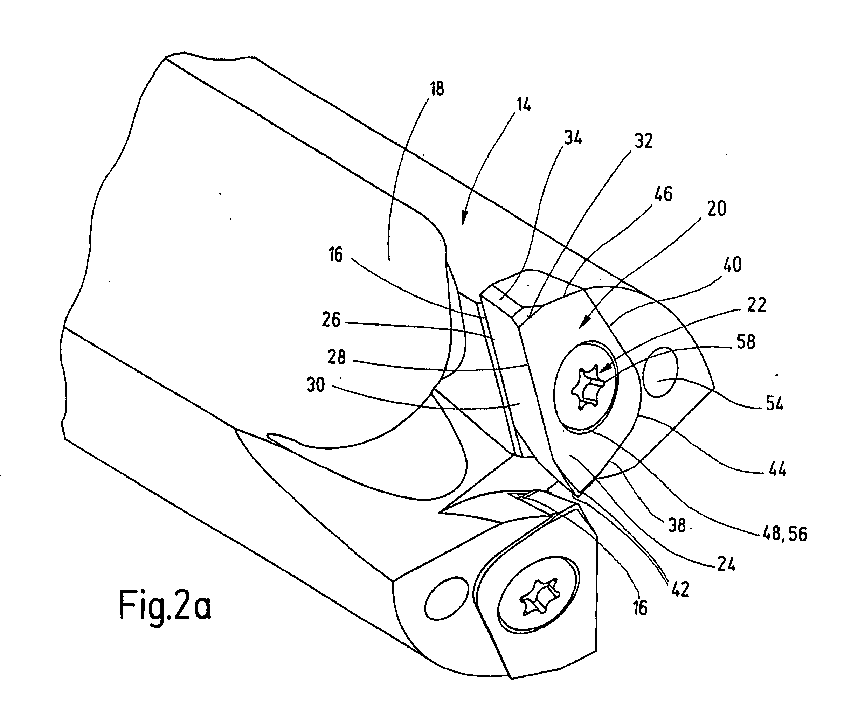

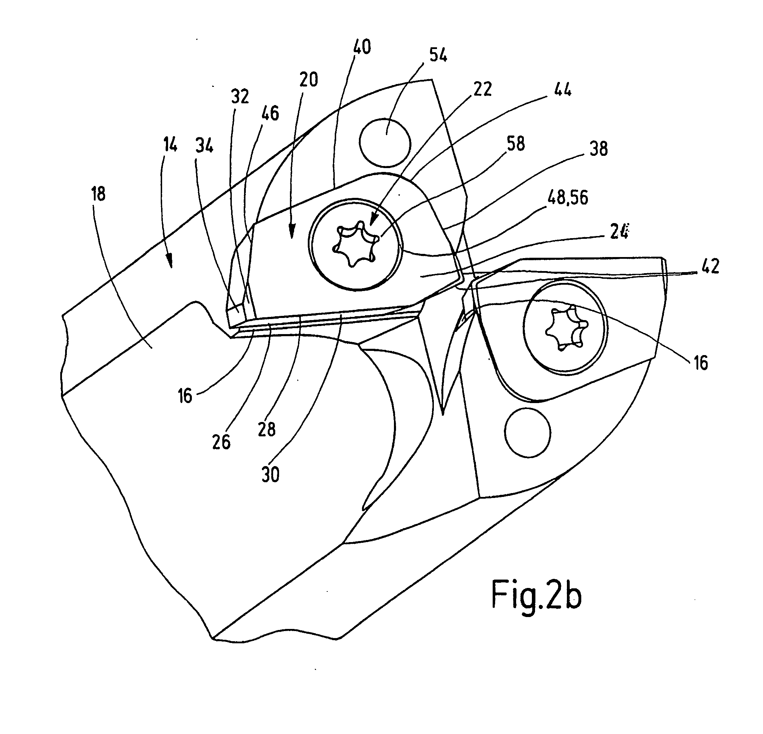

- Fig. 2a: einen vergrößerten Ausschnitt aus Fig. 1;
- Fig. 2b: einen weiteren Ausschnitt aus dem Bohrwerkzeug in einer gegenüber Fig. 2a verdrehten Lage;

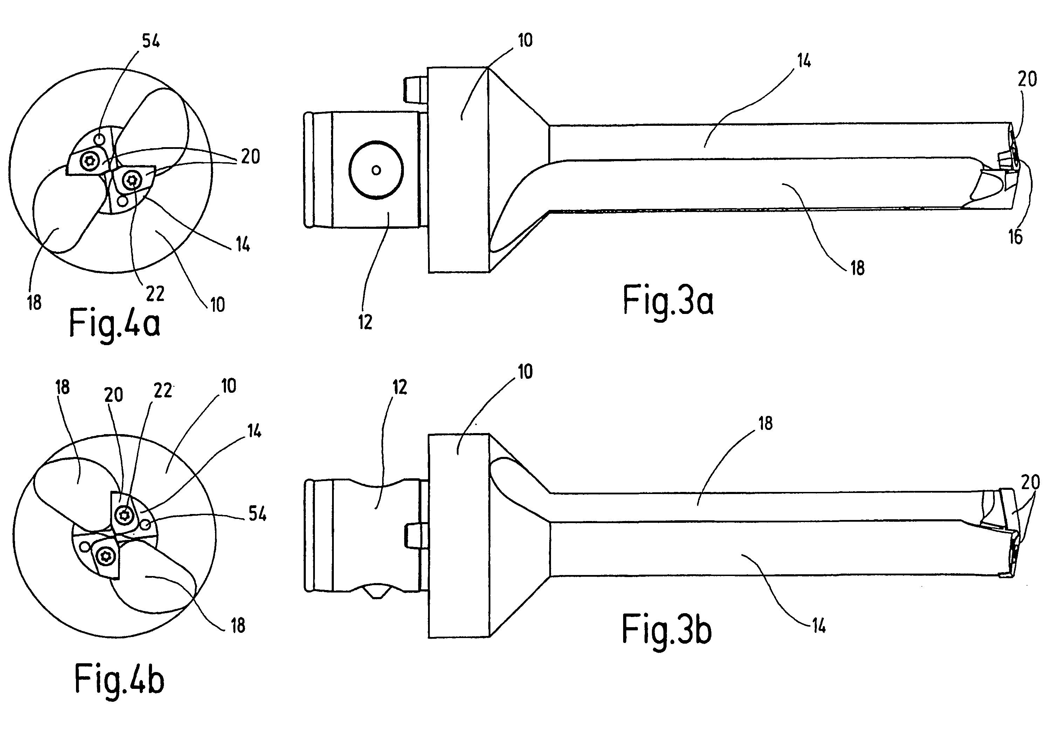

- Fig. 3a: und b zwei Seitenansichten des Bohrwerkzeugs;
- Fig. 4a: und b zwei Stimseitenansichten des Bohrwerkzeugs;
- Fig. 5a: und b vergrößerte Ausschnitte aus Fig. 3a und b;

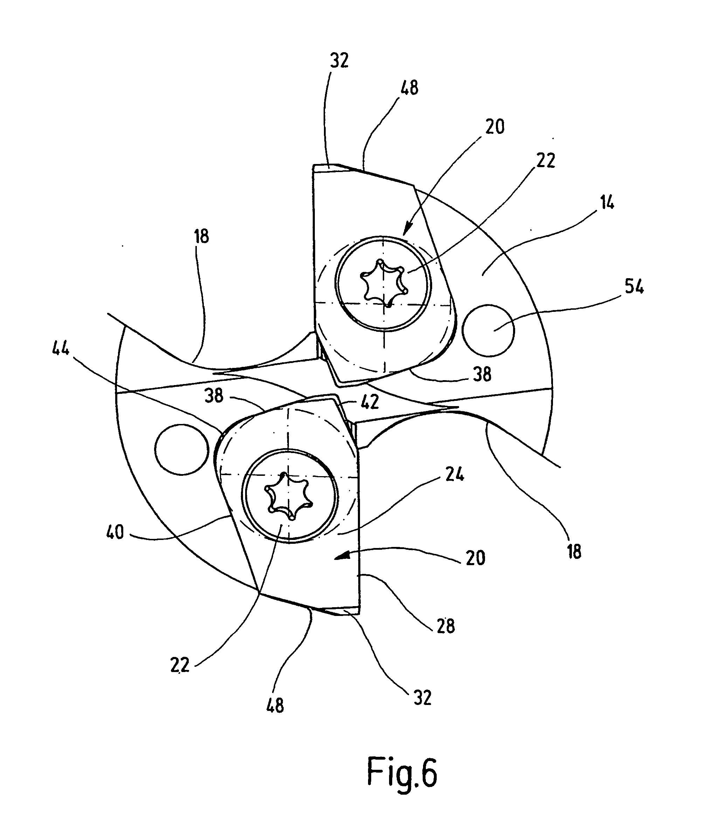

- Fig. 6: einen vergrößerten Ausschnitt aus Fig. 4b.

Das in der Zeichnung dargestellte Bohrwerkzeug ist als zweischneidiger Vollbohrer ausgebildet. Das Bohrwerkzeug ist für den Einsatz in Werkzeugmaschinen bestimmt und weist zu diesem Zweck einen von einem Kupplungsflansch 10 für eine Planflächenanlage begrenzten Kupplungsschaft 12 für den Anschluß an eine nicht dargestellte Maschinenspindel auf. Mit dem Kupplungsflansch 10 ist außerdem ein langgestreckter Grundkörper 14 verbunden, der stimseitig mit zwei Plattensitzen 16 versehen ist, von denen aus sich Spanfördemuten 18 über die Länge des Grundkörpers 14 erstrecken. In den Plattensitzen 16 sind zwei gleich ausgebildete Schneidplatten 20 auswechselbar angeordnet und mit Befestigungsschrauben 22 am Grundkörper 14 befestigt.

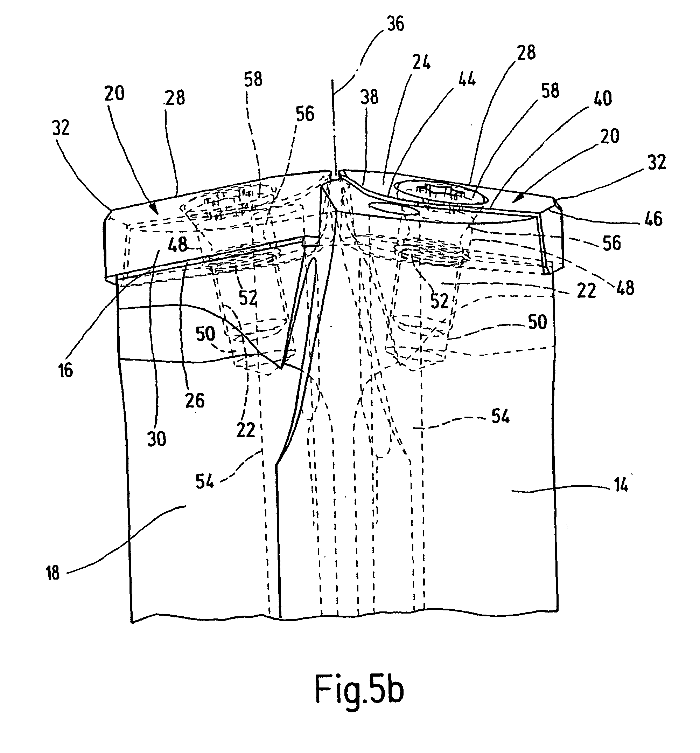

Die Schneidplatten 20 weisen eine Freifläche 24 und eine von dieser abgewandte Sitzfläche 26 auf, die planparallel zueinander angeordnet sind. Auf der Seite der Spanfördemut wird die Freifläche 24 durch die Hauptschneide 28 und die daran anschließende, in die Spanfördernut 18 mündende Spanfläche begrenzt. Radial nach außen hin schließen sich an die Hauptschneide 28 und die Spanfläche 30 eine zugleich als Führungskante ausgebildeten Nebenschneide 32 und eine Führungsfase 34 an. Die Nebenschneide 32 ist um einen Winkel von 90° gegenüber der Hauptschneide abgebogen, während die Führungsfase 34 über die Plattendicke hinweg parallel zur Bohrerachse 36 verläuft. Die Führungsfasen 34 der beiden Schneidplatten 20 unterstützen die Führung des Bohrwerkzeugs im Bohrloch, während der Spitzenwinkel der Hauptschneiden 28 der beiden Schneidplatten 20, der vor allem in Fig. 5b erkennbar ist, eine Zentrierung des Bohrers im Bohrloch gewährleistet. Weiter sind die Schneidplatten 20 durch zwei im wesentlichen zueinander senkrechte Sitzkanten 38,40 begrenzt, von denen die eine (38) unter einem Winkel von etwa 60° bis 80° in der Nähe der Bohrerachse an die Hauptschneide 28 anschließt und die andere (40) der Hauptschneide 28 gegenüberliegt und mit dieser einen nach außen konvergierenden Winkel von 10° bis 30° einschließt. Die Hauptschneide 28 geht dabei über eine abgerundete oder facettierte Schneiden- und Kantenpartie 42 in die Sitzkante 38 über, während die Sitzkante 38 und die Sitzkante 40 über eine gekrümmte Übergangspartie 44 miteinander verbunden sind. Am radial außen liegenden Ende der Sitzkante 40 schließt sich eine schräg radial nach außen zur Führungsfase verlaufende Begrenzungsfläche 46 an.

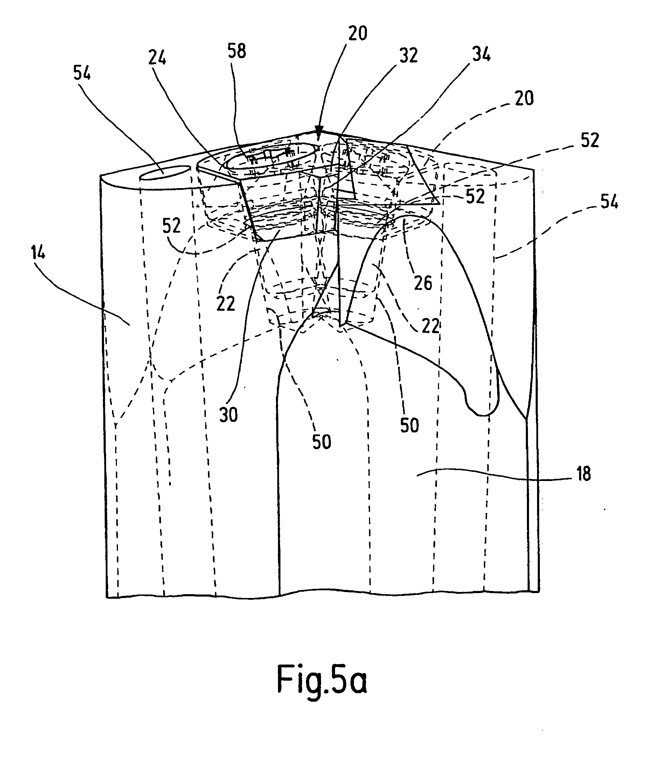

Im montierten Zustand weisen die Schneidplatten 20 im Bereich ihrer Hauptschneiden 28 einen sehr kleinen Abstand von 0,05 bis 0,2 mm auf. Zur Fixierung und Positionierung der Schneidplatten 20 in den Plattensitzen 16 greifen die als Senkkopfschrauben ausgebildeten Befestigungsschrauben 22 durch Durchtrittsöffnungen 48 in den Schneidplatten 20 hindurch und sind in Gewindebohrungen 50 des Grundkörpers 14 eingedreht. Die Durchtrittsöffnungen 48 sind mit ihrer Achse senkrecht zur Freifläche 24 und zur Sitzfläche 26 der Schneidplatten 20 ausgerichtet. Dementsprechend sind die Gewindebohrungen 50 zur Einstellung eines definierten Spitzenwinkels zwischen den Hauptschneiden 28 und eines vorgegebenen Freiwinkels im Bereich der Freifläche 24 mit ihrer Achse schräg zur Bohrerachse 36 ausgerichtet. Wie aus Fig. 5a und b zu ersehen ist, sind die Achsen der Gewindebohrungen windschief zur Bohrerachse 36 und zueinander ausgerichtet. Sie sind im Grundkörper von ihrer stimseitigen Öffnung 52 aus schräg in Richtung einer durch die Hauptschneide 28 der zugehörigen Schneidplatte 20 verlaufenden achsparallelen Ebene und zugleich schräg in Richtung einer hierzu senkrechten, durch die Bohrerachse 36 verlaufende achsparallelen Ebene gerichtet. Die Durchtrittsöffnung 48 für die Schrauben ist relativ weit zur Bohrerachse 36 gerückt und in Abstand von der Hauptschneide 28 in den Eckbereich zwischen den Sitzkanten 38,40 verlegt. Mit diesen Maßnahmen wird erreicht, daß die Gewindebohrungen 50 in Bereiche des Grundkörpers 14 mit ausreichend umgebendem Material eingreifen, wobei darauf zu achten ist, daß weder die Spanfördernuten 18 noch die Kühlmittelkanäle 54 angeschnitten werden. Die Befestigungsschrauben 22 weisen einen in eine konische Einsenkung 56 in der Schneidplatte 20 eingepaßten Senkkopf 58 auf, wobei die Einsenkung 56 in Bezug auf die Sitzkanten 38,40 so positioniert ist, daß die Senkkopfpassung und die Sitzpassung einen gegenseitigen Versatz zur Erzeugung eines Preßsitzes aufweisen. Damit lassen sich die Schneidplatten 20 bezüglich der Bohrerachse 36 exakt in den Plattensitzen 16 positionieren. Der gewünschte Bohrungsdurchmesser wird durch Abschleifen der Schneidplatten 20 im Bereich der Führungsfasen 34 eingestellt. Damit können mit einem einzigen Plattenrohling unterschiedliche Bohrungsdurchmesser stufenlos eingestellt werden.

Um auch bei hohen Bohrleistungen ein ratterfreies Bohren zu gewährleisten, ist zur Einstellung einer ausreichend langen Führungsfase eine Mindestplattendicke erforderlich, die vorzugsweise dem 0,2- bis 0,5-fachen des Bohrungsradius entspricht.

Da die Schneidplatten nicht über die Bohrerachse hinweg schneiden, sondem in diesem Bereich einen Abstand von < 0,2 mm voneinander aufweisen, bleibt dort ein minimaler Butzen oder Zapfen stehen, der nicht zerspant wird. Wenn dieser Zapfen einen ausreichend kleinen Durchmesser hat, wird er beim Bohrvorgang zerbröselt. Der Abstand zwischen den Schneidplatten ist dabei so einzustellen, daß kein Zapfen in der Mitte stehen bleibt, so daß auch bei der Herstellung von Sacklochbohrungen keine Nachbearbeitung nötig ist.

Zusammenfassend ist folgendes festzuhalten: Die Erfindung bezieht sich auf ein zwei- oder mehrschneidiges Bohrwerkzeug. Das Bohrwerkzeug weist einen um eine Bohrerachse 36 drehbaren Grundkörper 14 auf, in welchem stimseitig mindestens zwei Plattensitze 16 zur Aufnahme von gleich ausgebildeten Wechselschneidplatten 20 angeordnet sind. Die Wechselschneidplatten weisen je eine an eine Hauptschneide 28 unter Bildung eines Schneidkeils anschließende Spanfläche 30 und Freifläche 24 sowie eine der Freifläche abgewandte Sitzfläche 26 auf. Außerdem ist eine radial außen über je eine Kante an die Spanfläche 30, die Freifläche 24 und gegebenenfalls die Sitzfläche 26 anschließende Führungsfase 34 vorgesehen, mit der die Führung des Bohrwerkzeugs im Bohrloch unterstützt wird. Die Schneidplatten 20 werden im Bereich der Freifläche 24 und der Sitzfläche 26 von einer Durchtrittsöffnung 48 für eine Befestigungsschraube 22 durchdrungen, die in eine im Bereich der Plattensitze 16 zur Stirnseite des Grundkörpers 14 auf eine Gewindebohrung 50 eingedreht werden. Erfindungsgemäß sind die Durchtrittsöffnungen 48 mit ihrer Achse senkrecht zur Freifläche 24 und vorzugsweise zur Sitzfläche 26 der zugehörigen Schneidplatten 20 ausgerichtet, während die Achsen der Gewindebohrungen 50 im Grundkörper 14 schräg zur Bohrerachse 36 und schräg zueinander ausgerichtet sind.

## Patentansprüche

1. Bohrwerkzeug mit einem um eine Bohrerachse (36) drehbaren Grundkörper (14), mit mindestens zwei stirnseitig im Grundkörper (14) angeordneten Plattensitzen (16) und mit in die Plattensitze (16) auswechselbar einsetzbaren, vorzugsweise gleich ausgebildeten Schneidplatten (20), die je eine an eine Hauptschneide (28) anschließende Spanfläche (30) und Freifläche (24), eine der Freifläche (24) abgewandte Sitzfläche (26) und eine radial außen über je eine Kante an die Spanfläche (30), die Freifläche (24) und gegebenenfalls die Sitzfläche (26) anschließende Führungsfase (34) sowie eine die Freifläche (24) und die Sitzfläche (26) durchdringende Durchtrittsöffnung (48) für eine in eine im Bereich der Plattensitze (16) zur Stirnseite des Grundkörpers (14) offene Gewindebohrung (50) eindrehbare Befestigungsschraube (22) aufweisen, **dadurch gekennzeichnet, daß** die Durchtrittsöffnungen (48) mit ihrer Achse senkrecht zur Freifläche (24) der zugehörigen Schneidplatten (20) ausgerichtet sind und daß die Achsen der Gewindebohrungen (50) im Grundkörper (14) schräg zur Bohrerachse (36) und schräg zueinander ausgerichtet sind.

2. Bohrwerkzeug nach Anspruch 1, **dadurch gekennzeichnet, daß** die Hauptschneide (28) und eine die Führungsfase (34) begrenzende Nebenschneide (32) einen Winkel von weniger als 90° einschließen.

3. Bohrwerkzeug nach Anspruch 1 oder 2, **dadurch gekennzeichnet, daß** die Freifläche (24) und die Sitzfläche (26) der Schneidplatten (20) planparallel zueinander ausgerichtet sind und daß die Durchtnttsöffnung (48) mit ihrer Achse senkrecht zur Sitzfläche (26) ausgerichtet ist.

4. Bohrwerkzeug nach einem der Ansprüche 1 bis 3, **dadurch gekennzeichnet, daß** die Achsen der Gewindebohrungen (50) windschief zur Bohrerachse (36) und zueinander ausgerichtet sind.

5. Bohrwerkzeug nach einem der Ansprüche 1 bis 4, **dadurch gekennzeichnet, daß** die Gewindebohrungen (50) im Grundkörper (14) von ihrer stirnseitigen Öffnung (52) aus schräg in Richtung einer durch die Hauptschneide (28) der zugehörigen Schneidplatte (20) verlaufenden achsparallelen Ebene und schräg in Richtung einer hierzu senkrechten, durch die Bohrerachse (36) verlaufenden achsparallelen Ebene gerichtet sind.

6. Bohrwerkzeug nach einem der Ansprüche 1 bis 5, **dadurch gekennzeichnet, daß** die einander benachbarten Schneidplatten (20) im Bereich der Bohrerachse (36) einen Abstand von weniger als 0,2 mm, vorzugsweise von 0,05 bis 0,15 mm voneinander aufweisen.

7. Bohrwerkzeug nach einem der Ansprüche 1 bis 6, **dadurch gekennzeichnet, daß** die Schneidplatten (20) mit mindestens zwei einen Winkel miteinander einschließenden Sitzkanten (38,40) formschlüssig in den zugehörigen Plattensitz (16) eingepaßt sind.

8. Bohrwerkzeug nach einem der Ansprüche 1 bis 7, **dadurch gekennzeichnet, daß** die Befestigungsschrauben (22) einen in eine konische Einsenkung (56) in der Schneidplatte (20) eingepaßten Senkkopf (58) aufweisen und daß die Senkkopfpassung und die Sitzpassung einen gegenseitigen Versatz zur Erzeugung eines Preßsitzes aufweisen.

9. Bohrwerkzeug nach einem der Ansprüche 1 bis 8, **dadurch gekennzeichnet, daß** die Führungsfasen (34) der Schneidplatten (20) zur Einstellung eines definierten Bohrungsdurchmessers abschleifbar sind.

10. Bohrwerkzeug nach einem der Ansprüche 7 bis 9, **dadurch gekennzeichnet, daß** die beiden Sitzkanten (38,40) einen Winkel von 80° bis 100°, vorzugsweise von 90° miteinander einschließen.

11. Bohrwerkzeug nach einem der Ansprüche 7 bis 10, **dadurch gekennzeichnet, daß** die Sitzkanten (38,40) über eine abgerundete Übergangspartie (44) miteinander verbunden sind.

12. Bohrwerkzeug nach Anspruch 10 oder 11, **dadurch gekennzeichnet, daß** die Hauptschneide (28) und die freiflächenseitige Begrenzungskante der der Spanfläche (30) benachbarten Sitzkante (38) einen Winkel von 60° bis 80° miteinander einschließen.

13. Bohrwerkzeug nach einem der Ansprüche 10 bis 12, **dadurch gekennzeichnet, daß** die Hauptschneide (28) mit der freiflächenseitigen Begrenzungskante der der Spanfläche (30) benachbarten Sitzkante (38) über eine abgerundete oder facettierte Schneiden- und Kantenpartie (42) miteinander verbunden sind.

14. Bohrwerkzeug nach einem der Ansprüche 10 bis 13, **dadurch gekennzeichnet, daß** die Hauptschneide (28) und die freiflächenseitige Begrenzungskante der von der Spanfläche abgewandten Sitzkante (40) einen radial nach außen konvergierenden spitzen Winkel von 10° bis 30° miteinander einschließen.

15. Bohrwerkzeug nach einem der Ansprüche 6 bis 14, **dadurch gekennzeichnet, daß** die Führungsfase (34) und die von der Hauptschneide abgewandte Sitzkante (40) über eine gegenüber der Führungsfase (34) schräg radial nach innen gerichtete Begrenzungskante (46) miteinander verbunden sind.

16. Bohrwerkzeug nach einem der Ansprüche 1 bis 15, **dadurch gekennzeichnet, daß** die Führungsfase (34) der Schneidplatte (20) im Einbauzustand über die Plattendicke hinweg parallel zur Bohrerachse (36) ausgerichtet ist.

17. Bohrwerkzeug nach einem der Ansprüche 1 bis 16, **dadurch gekennzeichnet, daß** die Freifläche (24) und die Führungsfase (34) einen Winkel größer 90° miteinander einschließen.

18. Bohrwerkzeug nach einem der Ansprüche 1 bis 16, **dadurch gekennzeichnet, daß** die Plattendicke der Schneidplatten (20) dem 0,2- bis 0,5-fachen eines vorgegebenen Bohrungsradius entspricht.

19. Bohrwerkzeug nach einem der Ansprüche 1 bis 18, **dadurch gekennzeichnet, daß** die Hauptschneiden (28) der Schneidplatten (20) einer zu diesen parallelen, durch die Bohrerachse verlaufenden Mittelebene in Schneidrichtung voraneilen.

20. Bohrwerkzeug nach einem der Ansprüche 1 bis 19, **dadurch gekennzeichnet, daß** die Schneidplatten (20) bezüglich der Bohrerachse (36) spiegelbildlich am Grundkörper angeordnet sind.

21. Bohrwerkzeug nach einem der Ansprüche 1 bis 20, **dadurch gekennzeichnet, daß** die Spanfläche (30) der Schneidplatten (20) mit einer Begrenzungsfläche je einer im Grundkörper angeordneten Spanfördernut (18) fluchtet.

22. Bohrwerkzeug nach einem der Ansprüche 1 bis 21, **dadurch gekennzeichnet, daß** im Grundkörper (14) im Abstandsbereich zwischen den beiden Plattensitzen (16) eine von den Schneidplatten (20) aus in eine der Spanfördemuten (18) mündende, unsymmetrisch zur Bohrerachse (36) angeordnete Abweisschräge eingeformt ist.

23. Wechselschneidplatte für zwei- oder mehrschneidige Bohrwerkzeuge mit einer Hauptschneide, mit je einer an diese unter Bildung eines Schneidkeils anschließenden Spanfläche (30) und Freifläche (24), mit einer der Freifläche (24) abgewandten Sitzfläche (26), mit einer nach außen über je eine Kante an die Spanfläche (30), die Freifläche (24) und gegebenenfalls die Sitzfläche (26) anschließenden Führungsfase (34), und mit einer die Freifläche (24) und die Sitzfläche (30) durchdringenden Durchtrittsöffnung (48) für eine Befestigungsschraube (22), **dadurch gekennzeichnet, daß** die Freifläche (24) und die Sitzfläche (26) planparallel zueinander angeordnet und von der Durchtrittsöffnung (48) senkrecht durchdrungen sind, und daß mindestens zwei einen Winkel von 80° bis 100° miteinander einschließende Sitzkanten (38,40) vorgesehen sind, von denen die eine Sitzkante (38) einen Winkel von 60° bis 80° und die andere Sitzkante (40) einen nach außen konvergierenden Winkel von 10° bis 30° mit der Hauptschneide (28) einschließen.

24. Wechselschneidplatte nach Anspruch 23, **dadurch gekennzeichnet, daß** die Durchtrittsöffnung (48) von der Führungsfase (34) aus näher in Richtung innere Sitzkante (38) gerückt ist.

25. Wechselschneidplatte nach Anspruch 23 oder 24, **dadurch gekennzeichnet, daß** die Führungsfase (34) zur Einstellung eines definierten Bohrungsdurchmessers abschleifbar ist.

26. Wechselschneidplatte nach einem der Ansprüche 23 bis 25, **dadurch gekennzeichnet, daß** die Spanfläche (28) mit der benachbarten Sitzkante (38) über eine abgerundete oder facettierte Schneiden- und Kantenpartie (42) miteinander verbunden sind.

27. Wechselschneidplatte nach einem der Ansprüche 23 bis 26, **dadurch gekennzeichnet, daß** die im Bereich der Führungsfase (34) angeordnete Nebenschneide und die von der Hauptschneide (28) abgewandte Sitzkante (40) über eine gegenüber der Nebenschneide schräg nach innen gerichtete Begrenzungskante (46) miteinander verbunden sind.

28. Wechselschneidplatte nach einem der Ansprüche 23 bis 27, **dadurch gekennzeichnet, daß** die Sitzkanten (38,40) über eine abgerundete oder facettierte Ecke miteinander verbunden sind.

## Claims

1. A drilling tool comprising a base body (14) which can be rotated about a drilling axis (36), comprising at least two plate seats (16) arranged on the front face in the base body (14), and comprising cutting plates (20) which can be interchangeably inserted into the plate seats (16), and are preferably identical, and which cutting plates (20) each have a machining face (30) and clearance face (24) adjoining a principal cutting edge (28), a seat face (26) facing away from the clearance face (24), and a guiding land (34) adjoining radially on the outside through each edge the machining face (30), the clearance face (24) and optionally the seat face (26), and a hole (48) which extends through the clearance face (24) and the seat face (26) for a retaining screw (22) which can be screwed into a threaded bore (50) open to the front face of the base body (14) in the area of the plate seats (16), **characterized in that** the holes (48) with their axis are aligned perpendicularly to the clearance face (24) of the associated cutting plates (20), and that the axes of the threaded bores (50) are aligned inclined with respect to the drilling axis (36) and inclined to each other in the base body (14).

2. The drilling tool according to Claim 1, **characterized in that** the principal cutting edge (28) and an auxiliary cutting edge (32) bordering the guiding land (34) define an angle of less than 90°.

3. The drilling tool according to Claim 1 or 2, **characterized in that** the clearance face (24) and the seat face (26) of the cutting plates (20) are aligned in parallel planes, and that the axis of the hole (48) is aligned perpendicularly to the seat face (26).

4. The drilling tool according to one of the Claims 1 to 3, **characterized in that** the axes of the threaded bores (50) are aligned inclined to the drilling axis (36) and to each other.

5. The drilling tool according to one of the Claims 1 to 4, **characterized in that** the threaded bores (50) in the base body (14) are directed from their front-face opening (52) inclined in direction of an axis-parallel plane extending though the principal cutting edge (28) of the associated cutting plate (20), and inclined in direction of an axis-parallel plane perpendicular to and extending through the drilling axis (36).

6. The drilling tool according to one of the Claims 1 to 5, **characterized in that** the adjacent cutting plates (20) are spaced in the area of the drilling axis (36) at a distance of less than 0.2 mm, preferably 0.005 to 0.15 mm from each other.

7. The drilling tool according to one of the Claims 1 to 6, **characterized in that** the cutting plates (20) are fitted form-lockingly into the associated plate seat (16) with at least two seat edges (38, 40) each defining an angle therewith.

8. The drilling tool according to one of the Claims 1 to 7, **characterized in that** the retaining screws (22) have a flat head (58) fitting into a conical recess (56) in the cutting plate (20), and that the flat-head fit and the seat fit are reciprocally offset to create a press fit.

9. The drilling tool according to one of the Claims 1 to 8, **characterized in that** the guiding lands (34) of the cutting plates (20) can be ground off to provide a defined bore diameter.

10. The drilling tool according to one of the Claims 7 to 9, **characterized in that** the two seat edges (38, 40) define an angle of 80° to 100°, preferably of 90°, with each other.

11. The drilling tool according to one of the Claims 7 to 10, **characterized in that** the seat edges (38, 40) are connected to each other through a rounded transition portion (44).

12. The drilling tool according to Claim 10 or 11, **characterized in that** the principal cutting plate (28) and the boundary edge of the seat edge (38) adjacent to the machining face (30), which boundary edge is on the side of the clearance face, define an angle of 60° to 80° with each other.

13. The drilling tool according to one of the Claims 10 to 12, **characterized in that** the principal cutting edge (28) is connected with the boundary edge of the seat edge (38) adjacent to the machining face (30), which boundary edge is on the side of the clearance face, through a rounded or faceted cutting-edge and edge portion (42).

14. The drilling tool according to one of the Claims 10 to 13, **characterized in that** the principal cutting edge (28) and the boundary edge of the seat edge (40) facing away from the machining face, which boundary edge is on the side of the clearance face, define a radially outwardly converging acute angle of 10° to 30° with each other.

15. The drilling tool according to one of the Claims 6 to 14, **characterized in that** the guiding land (34) and the seat edge (40) facing away from the principal cutting edge are connected with each other through a boundary edge (46) directed inclined radially inwardly with respect to the guiding land (34).

16. The drilling tool according to one of the Claims 1 to 15, **characterized in that** the guiding land (34) of the cutting plate (20) is aligned in the built-in state beyond the plate thickness parallel to the drilling axis (36).

17. The drilling tool according to one of the Claims 1 to 16, **characterized in that** the clearance face (24) and the guiding land (34) define an angle larger than 90° with each other.

18. The drilling tool according to one of the Claims 1 to 16, **characterized in that** the plate thickness of the cutting plates (20) corresponds to 0.2 to 0.5 times a pregiven bore radius.

19. The drilling tool according to one of the Claims 1 to 18, **characterized in that** the principal cutting edges (28) of the cutting plates (20) lead in cutting direction of a center plane extending through the drill axis and parallel to the principal cutting edges.

20. The drilling tool according to one of the Claims 1 to 19, **characterized in that** the cutting plates (20) are arranged mirror-inverted with respect to the drilling axis (36) on the base body.

21. The drilling tool according to one of the Claims 1 to 20, **characterized in that** each machining face (30) of the cutting plates (20) is aligned with a boundary surface of the chip-conveying grooves (18) arranged in the base body.

22. The drilling tool according to one of the Claims 1 to 21, **characterized in that** in the base body (14) in the spacing between the two plate seats (16) there is formed a deflecting incline extending from the cutting plates (20) and ending in one of the chip-conveying grooves (18) and arranged asymmetrically with respect to the drilling axis (36).

23. An interchangeable cutting plate for double or multiple-edged drilling tools comprising a principal cutting edge, comprising a machining face (30) and a clearance face (24) each adjoining the principal cutting edge to form a cutting wedge, comprising a seat face (26) facing away from the clearance face (24), comprising a guiding land (34) adjoining outwardly through each edge the machining face (30), the clearance face (24) and optionally the seat face (26), and comprising a hole (48) for a retaining screw (2), which hole extends through the clearance face (24) and the seat face (30), **characterized in that** the clearance face (24) and the seat face (26) are arranged in parallel planes and are pierced through by the hole (48), and that at least two seat edges (38, 40) defining an angle of 80° to 100° with each other are provided, of which the one seat edge (38) defines an angle of 60° to 80° and the other seat edge (40) defines an outwardly converging angle of 10° to 30° with the principal cutting edge (28).

24. The interchangeable cutting plate according to Claim 23, **characterized in that** the hole (48) is oriented a distance from the land (34) and closer in direction of the inner seat edge (38).

25. The interchangeable cutting plate according to Claim 23 or 24, **characterized in that** the land (34) can be ground off to provide a defined bore diameter.

26. The interchangeable cutting plate according to one of the Claims 23 to 25, **characterized in that** the machining face (28) is connected with the adjacent seat edge (38) through a rounded or faceted cutting-edge and edge portion (42).

27. The interchangeable cutting plate according to one of the Claims 23 to 26, **characterized in that** the auxiliary cutting edge arranged in the area of the guiding land (34) and the seat edge (40) facing away from the principal cutting edge (28) are connected with each other through a boundary edge (46) directed inclined inwardly with respect to the auxiliary cutting edge.

28. The interchangeable cutting plate according to one of the Claims 23 to 27, **characterized in that** the seat edges (38, 40) are connected with each other through a rounded or faceted corner.

## Revendications

1. Outil de perçage comprenant un corps de base (14) pouvant tourner autour d'un axe (36) de foret ; au moins deux logements (16) occupant des positions frontales dans le corps de base (14) ; et des plaquettes de coupe (20) préférentiellement de réalisations identiques, qui peuvent être introduites de manière interchangeable dans lesdits logements (16), et sont respectivement pourvues d'une face d'attaque (30) et d'une surface dépouillée (24) se rattachant respectivement à un tranchant principal (28), d'une surface de siège (26) tournée à l'opposé de ladite surface dépouillée (24), d'un biseau de guidage (34) se rattachant à ladite face d'attaque (30), à ladite surface dépouillée (24) et éventuellement à ladite surface de siège (26), à l'extérieur dans le sens radial par l'intermédiaire d'une arête respective, ainsi que d'un orifice de passage (48) qui traverse la surface dépouillée (24) et la surface de siège (26), à destination d'une vis de fixation (22) pouvant être vissée dans un perçage taraudé (50) ouvert vers la face frontale du corps de base (14), dans la région des logements (16) des plaquettes, **caractérisé par le fait que** l'axe des orifices de passage (48) est orienté perpendiculairement à la surface de dépouille (24) des plaquettes de coupe (20) associées ; et **par le fait que** les axes des trous taraudés (50), pratiqués dans le corps de base (14), sont orientés à l'oblique vis-à-vis de l'axe (36) du foret et à l'oblique les uns vis-à-vis des autres.

2. Outil de perçage selon la revendication 1, **caractérisé par le fait que** le tranchant principal (28), et un tranchant auxiliaire (32) délimitant le biseau de guidage (34), décrivent un angle inférieur à 90°.

3. Outil de perçage selon la revendication 1 ou 2, **caractérisé par le fait que** la surface dépouillée (24) et la surface de siège (26) des plaquettes de coupe (20) sont orientées dans des plans mutuellement parallèles ; et **par le fait que** l'axe de l'orifice de passage (48) est orienté perpendiculairement à ladite surface de siège (26).

4. Outil de perçage selon l'une des revendications 1 à 3, **caractérisé par le fait que** les axes des trous taraudés (50) sont déjetés vis-à-vis de l'axe (36) du foret, et les uns vis-à-vis des autres.

5. Outil de perçage selon l'une des revendications 1 à 4, **caractérisé par le fait que** les trous taraudés (50) pratiqués dans le corps de base (14) sont orientés, à partir de leur ouverture frontale (52), à l'oblique dans la direction d'un plan parallèle à l'axe, passant par le tranchant principal (28) de la plaquette de coupe (20) associée, et à l'oblique dans la direction d'un plan parallèle à l'axe, perpendiculaire au plan précité et passant par l'axe (36) du foret.

6. Outil de perçage selon l'une des revendications 1 à 5, **caractérisé par le fait que** les plaquettes de coupe (20) voisines l'une de l'autre présentent, dans la région de l'axe (36) du foret, un espacement mutuel inférieur à 0,2 mm et compris, de préférence, entre 0,05 et 0,15 mm.

7. Outil de perçage selon l'une des revendications 1 à 6, **caractérisé par le fait que** les plaquettes de coupe (20) sont enchâssées par concordance de formes, dans le logement (16) associé, par au moins deux arêtes d'assise (38, 40) décrivant mutuellement un angle.

8. Outil de perçage selon l'une des revendications 1 à 7, **caractérisé par le fait que** les vis de fixation (22) présentent une tête fraisée (58) ajustée dans un fraisage tronconique (56) pratiqué dans la plaquette de coupe (20) ; et **par le fait que** l'ajustement de la tête fraisée et l'ajustement de l'assise comportent un décalage réciproque, en vue d'instaurer un ajustement serré.

9. Outil de perçage selon l'une des revendications 1 à 8, **caractérisé par le fait que** les biseaux de guidage (34) des plaquettes de coupe (20) peuvent être rectifiés par meulage, en vue de régler un diamètre de perçage bien défini.

10. Outil de perçage selon l'une des revendications 7 à 9, **caractérisé par le fait que** les deux arêtes d'assise (38, 40) décrivent mutuellement un angle de 80° à 100°, préférentiellement de 90°.

11. Outil de perçage selon l'une des revendications 7 à 10, **caractérisé par le fait que** les arêtes d'assise (38, 40) sont reliées mutuellement par l'intermédiaire d'une région de transition arrondie (44).

12. Outil de perçage selon la revendication 10 ou 11, **caractérisé par le fait que** le tranchant principal (28) et le bord, situé côté surface dépouillée et délimitant l'arête d'assise (38) voisine de la face d'attaque (30), décrivent mutuellement un angle de 60° à 80°.

13. Outil de perçage selon l'une des revendications 10 à 12, **caractérisé par le fait que** le tranchant principal (28) et le bord, situé côté surface dépouillée et délimitant l'arête d'assise (38) voisine de la face d'attaque (30), sont reliés l'un à l'autre par l'intermédiaire d'une région (42) arrondie ou facettée, matérialisant l'interface tranchant-arête.

14. Outil de perçage selon l'une des revendications 10 à 13, **caractérisé par le fait que** le tranchant principal (28) et le bord, situé côté surface dépouillée et délimitant l'arête d'assise (40) tournée à l'opposé de la face d'attaque, décrivent mutuellement un angle aigu de 10° à 30°, convergeant vers l'extérieur dans le sens radial.

15. Outil de perçage selon l'une des revendications 6 à 14, **caractérisé par le fait que** le biseau de guidage (34), et l'arête d'assise (40) tournée à l'opposé du tranchant principal, sont reliés mutuellement par l'intermédiaire d'une arête de délimitation (46) dirigée à l'oblique vers l'intérieur, dans le sens radial, vis-à-vis dudit biseau de guidage (34).

16. Outil de perçage selon l'une des revendications 1 à 15, **caractérisé par le fait que** le biseau de guidage (34) de la plaquette de coupe (20) est orienté, à l'état intégré, parallèlement à l'axe (36) du foret sur l'épaisseur de ladite plaquette.

17. Outil de perçage selon l'une des revendications 1 à 16, **caractérisé par le fait que** la surface dépouillée (24) et le biseau de guidage (34) décrivent mutuellement un angle supérieur à 90°.

18. Outil de perçage selon l'une des revendications 1 à 16, **caractérisé par le fait que** l'épaisseur des plaquettes de coupe (20) correspond à de 0,2 à 0,5 fois un rayon de perçage préétabli.

19. Outil de perçage selon l'une des revendications 1 à 18, **caractérisé par le fait que** les tranchants principaux (28) des plaquettes de coupe (20) sont en déphasage vers l'avant, dans la direction de sectionnement, vis-à-vis d'un plan médian qui leur est parallèle et passe par l'axe du foret.

20. Outil de perçage selon l'une des revendications 1 à 19, **caractérisé par le fait que** les plaquettes de coupe (20) sont agencées spéculairement, sur le corps de base, par rapport à l'axe (36) du foret.

21. Outil de perçage selon l'une des revendications 1 à 20, **caractérisé par le fait que** la face d'attaque (30) des plaquettes de coupe (20) coïncide avec une surface de délimitation d'une rainure respective (18) d'acheminement de copeaux, pratiquée dans le corps de base.

22. Outil de perçage selon l'une des revendications 1 à 21, **caractérisé par le fait qu'**un biseau déflecteur, agencé asymétriquement vis-à-vis de l'axe (36) du foret et débouchant dans l'une des rainures (18) d'acheminement des copeaux, à partir des plaquettes de coupe (20), est pratiqué dans le corps de base (14), dans la zone d'espacement entre les deux logements (16) desdites plaquettes.

23. Plaquette de coupe remplaçable pour outils de perçage à deux ou plusieurs tranchants, comportant un tranchant principal comprenant une face d'attaque (30) et une surface dépouillée (24) se rattachant respectivement audit tranchant, en formant un coin de sectionnement ; une surface de siège (26) tournée à l'opposé de la surface dépouillée (24) ; un biseau de guidage (34) se rattachant vers l'extérieur, par l'intermédiaire d'une arête respective, à la face d'attaque (30), à la surface dépouillée (24) et éventuellement à la surface de siège (26) ; et un orifice de passage (48) qui traverse la surface dépouillée (24) et la surface de siège (26), et est destiné à une vis de fixation (22), **caractérisée par le fait que** la surface dépouillée (24) et la surface de siège (26) sont disposées dans des plans mutuellement parallèles, et sont traversées perpendiculairement par l'orifice de passage (48) ; et par la présence d'au moins deux arêtes d'assise (38, 40) décrivant mutuellement un angle de 80° à 100°, parmi lesquelles l'une (38) et l'autre (40) desdites arêtes d'assise décrivent respectivement, avec le tranchant principal (28), un angle de 60° à 80°, et un angle de 10° à 30° convergeant vers l'extérieur.

24. Plaquette de coupe remplaçable selon la revendication 23, **caractérisée par le fait que** l'orifice de passage (48) est plus rapproché, à partir du biseau de guidage (34), en direction de l'arête d'assise (38) intérieure.

25. Plaquette de coupe remplaçable selon la revendication 23 ou 24, **caractérisée par le fait que** le biseau de guidage (34) peut être rectifié par meulage, en vue de régler un diamètre de perçage bien défini.

26. Plaquette de coupe remplaçable selon l'une des revendications 23 à 25, **caractérisée par le fait que** la face d'attaque (30) est reliée à l'arête d'assise voisine (38) par l'intermédiaire d'une région (42) arrondie ou facettée, matérialisant l'interface tranchant-arête.

27. Plaquette de coupe remplaçable selon l'une des revendications 23 à 26, **caractérisée par le fait que** le tranchant auxiliaire situé dans la région du biseau de guidage (34), et l'arête d'assise (40) tournée à l'opposé du tranchant principal (28), sont reliés mutuellement par l'intermédiaire d'une arête de délimitation (46) dirigée à l'oblique vers l'intérieur vis-à-vis dudit tranchant auxiliaire.

28. Plaquette de coupe remplaçable selon l'une des revendications 23 à 27, **caractérisée par le fait que** les arêtes d'assise (38, 40) sont reliées mutuellement par l'intermédiaire d'un coin arrondi ou facetté.
